# EUROPEAN PATENT APPLICATION

(11) **EP 1 630 591 A1**
(43) Date of publication of application: **01.03.2006**
(21) Application number: 04020007.3
(22) Date of filing: 24.08.2004
(51) Int. Cl.: G02C 9/00

(54) **Eyeglass assembly with a auxiliary eyeglass unit attached to a primary eyeglass unit by a magnetic connector**

(71) Applicant: Huang, Yung-Ming, Lu-Chou City, Taipei Hsien (TW)
(72) Inventor: Huang, Yung-Ming, Lu-Chou City, Taipei Hsien (TW)
(74) Representative: Herden, Andreas F.

(57) **Abstract**

An eyeglass assembly includes a primary eyeglass unit (10) and an auxiliary eyeglass unit (20). The auxiliary eyeglass unit (20) includes two auxiliary lenses (2), a connecting member (3) that is connected fixedly to the auxiliary lenses (2), and a magnetic connector (5) that is attached to the primary eyeglass unit (10) by a magnetic attractive force and that is connected pivotally to the connecting member (3) so as to permit an assembly of the connecting member (3) and the auxiliary lenses (2) to turn upwardly relative to the primary eyeglass unit (10).

## Description

This invention relates to an eyeglass assembly that includes a primary eyeglass unit and an auxiliary eyeglass unit, and more particularly to an eyeglass assembly that includes an auxiliary eyeglass unit which is attached to a primary eyeglass unit by a magnetic connector.

A first conventional eyeglass assembly includes a primary eyeglass unit and an auxiliary eyeglass unit connected pivotally to the primary eyeglass unit. The auxiliary eyeglass unit can be turned upwardly when it is necessary to use the primary eyeglass unit only. Although the first conventional eyeglass assembly is convenient in use, replacement of the auxiliary eyeglass unit is inconvenient due to need of a screwdriver. A second conventional eyeglass assembly includes an auxiliary eyeglass unit that is attached to a primary eyeglass unit by a magnetic connector, which is secured to a bridge of the auxiliary eyeglass unit. Although the auxiliary eyeglass unit of the second conventional eyeglass assembly is convenient to replace, when it is necessary to remove the auxiliary eyeglass unit from the primary eyeglass unit for only a short period of time, the second conventional eyeglass assembly may be misplaced.

The object of this invention is to provide an eyeglass assembly that can overcome the disadvantages associated with the above-mentioned conventional eyeglass assemblies.

According to this invention, an eyeglass assembly includes a primary eyeglass unit and an auxiliary eyeglass unit. The auxiliary eyeglass unit includes two auxiliary lenses, a connecting member that is connected fixedly to the auxiliary lenses, and a magnetic connector that is attached to the primary eyeglass unit by a magnetic attractive force and that is connected pivotally to the connecting member so as to permit an assembly of the connecting member and the auxiliary lenses to turn upwardly relative to the primary eyeglass unit.

As such, when the auxiliary eyeglass unit is not to be used for a short period of time, the assembly of the connecting member and the auxiliary lenses can be turned upwardly relative to the primary eyeglass unit. When the auxiliary eyeglass unit is not to be used for a long period of time or when replacement of the auxiliary eyeglass unit is desired, the magnetic connector can be removed from the primary eyeglass unit by applying a pulling force, which is larger than the magnetic attractive force, to the magnetic connector.

These and other features and advantages of this invention will become apparent in the following detailed description of the preferred embodiments of this invention, with reference to the accompanying drawings, in which:
Fig. 1 is a partly exploded perspective view of the first preferred embodiment of an eyeglass assembly according to this invention;
Fig. 2 is a fragmentary exploded perspective view of the first preferred embodiment;
Fig. 3 is a fragmentary top view of the first preferred embodiment;
Fig. 4 is a fragmentary sectional view of the first preferred embodiment taken along Line IV-IV in Fig. 3;
Fig. 5 is a fragmentary side view of the first preferred embodiment, illustrating how two primary lenses of a primary eyeglass unit are covered by two auxiliary lenses of the auxiliary eyeglass unit;
Fig. 6 is a fragmentary side view of the first preferred embodiment, illustrating how an assembly of a connecting member and the auxiliary lenses is turned upwardly relative to the primary eyeglass unit;
Fig. 7 is a partly exploded perspective view of the second preferred embodiment of an eyeglass assembly according to this invention;
Fig. 8 is a fragmentary exploded perspective view of the third preferred embodiment of an eyeglass assembly according to this invention; and
Fig. 9 is a fragmentary top view of the third preferred embodiment.

Before the present invention is described in greater detail in connection with the preferred embodiments, it should be noted that similar elements and structures are designated by like reference numerals throughout the entire disclosure.

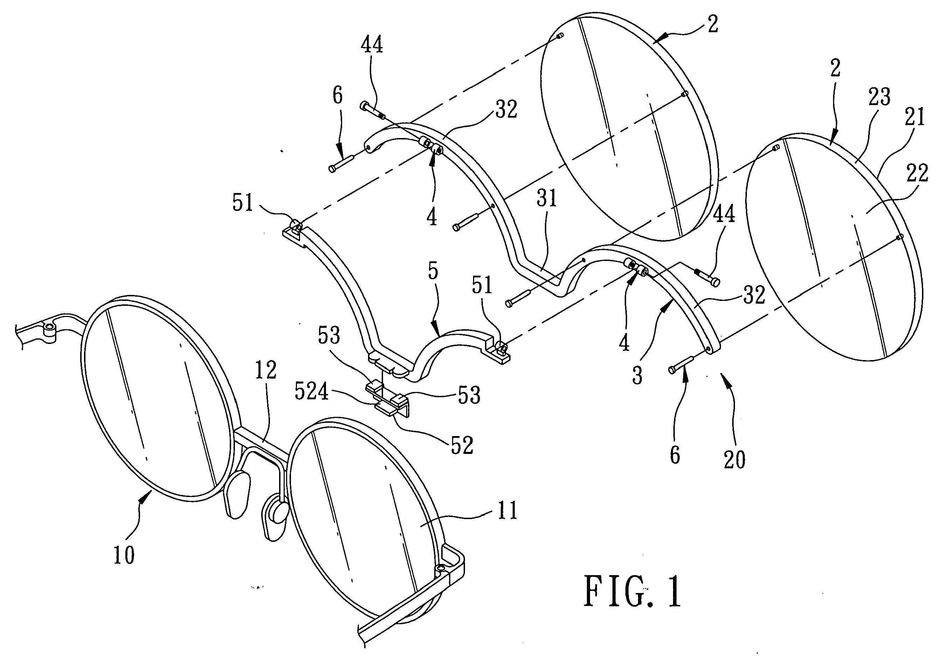

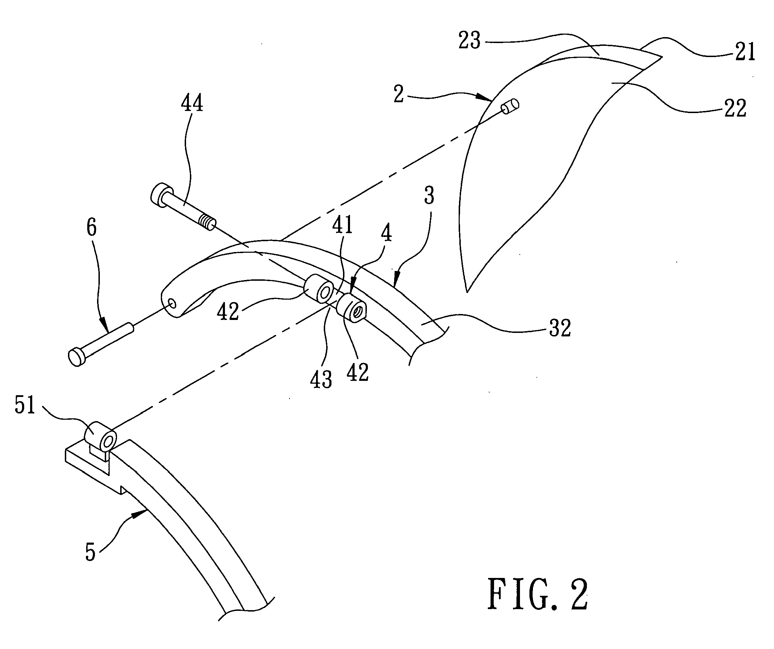

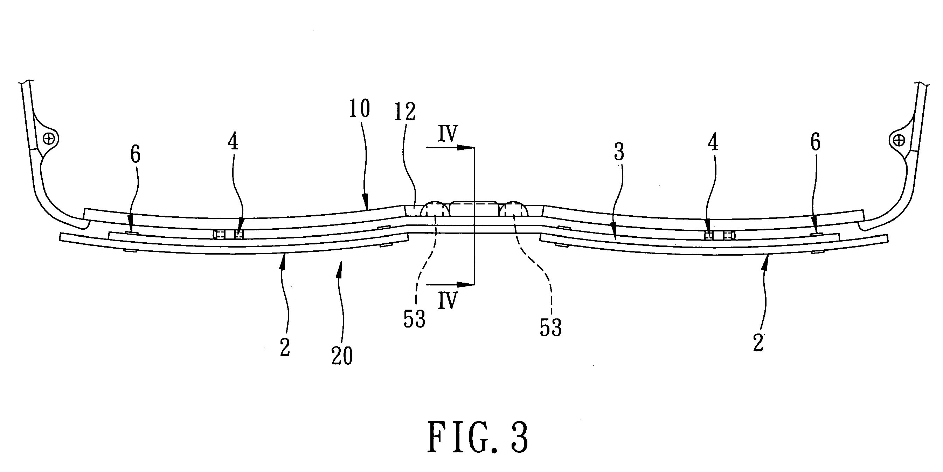

Referring to Figs. 1, 2, 3, 4, and 5, the first preferred embodiment of an eyeglass assembly according to this invention is shown to include a primary eyeglass unit 10 and an auxiliary eyeglass unit 20.

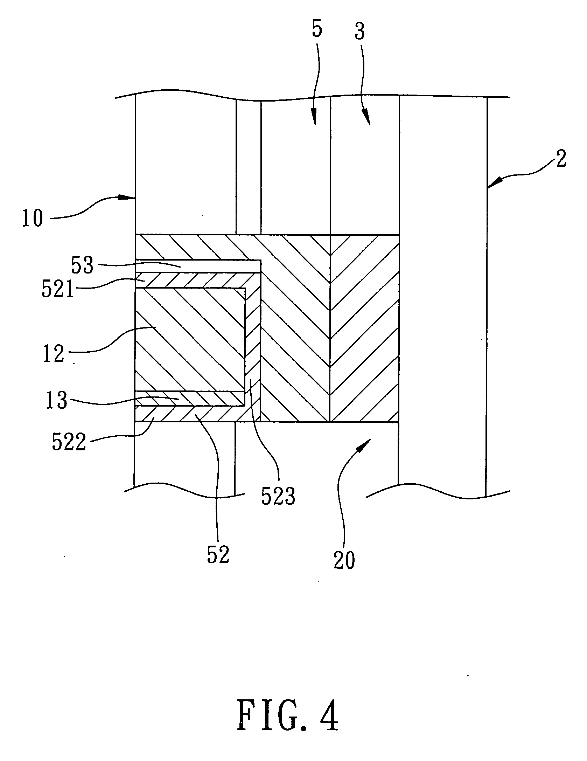

The primary eyeglass unit 10 includes two primary lenses 11, a bridge 12 interconnecting the primary lenses 11 fixedly, and a first magnet unit consisting of a magnet 13 (see Fig. 4) that is shaped as a plate which abuts against and which is connected fixedly to a bottom surface of the bridge 12.

The auxiliary eyeglass unit 20 includes two auxiliary lenses 2, a connecting member 3, two hinge units 4, and a magnetic connector 5.

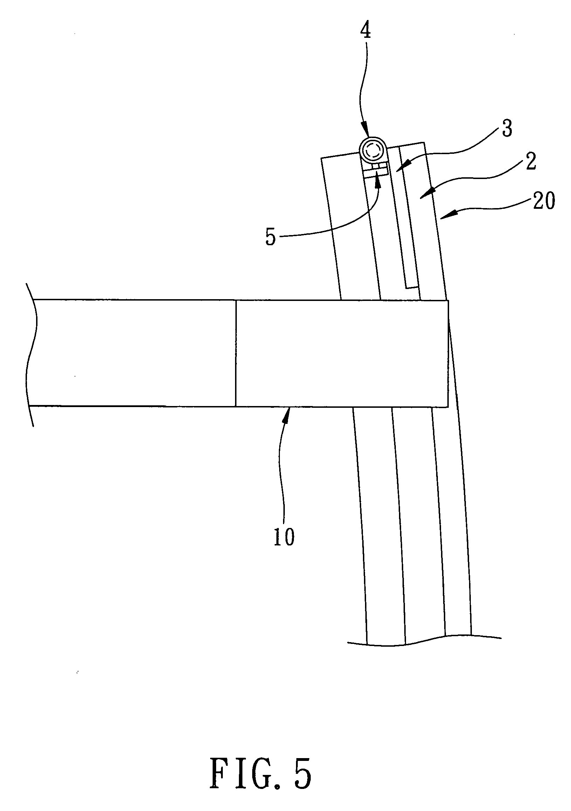

The auxiliary lenses 2 are disposed in front of and cover the primary lenses 11 of the primary eyeglass unit 10, respectively, as shown in Fig. 5. Each of the auxiliary lenses 2 has a front side surface 21, a rear side surface 22, and an annular surface 23. Preferably, the auxiliary lenses 2 are made of a lightweight resin.

The connecting member 3 is made of steel, is shaped as an elongated rod, and has a horizontal middle rod portion 31 and two curved side rod portions 32 that are formed respectively and integrally with two opposite ends of the middle rod portion 31. The curved side rod portions 32 abut respectively against and are connected respectively and fixedly to outer peripheries of rear side surfaces 22 of the auxiliary lenses 2 by rivets 6.

Each of the hinge units 4 has a base plate portion 41 connected fixedly to a rear surface of the corresponding curved side rod portion 32 of the connecting member 3, two sleeve portions 42 formed integrally with the base plate portion 41 to define a notch 43 therebetween, and a pivot pin 44 extending through the sleeve portions 42.

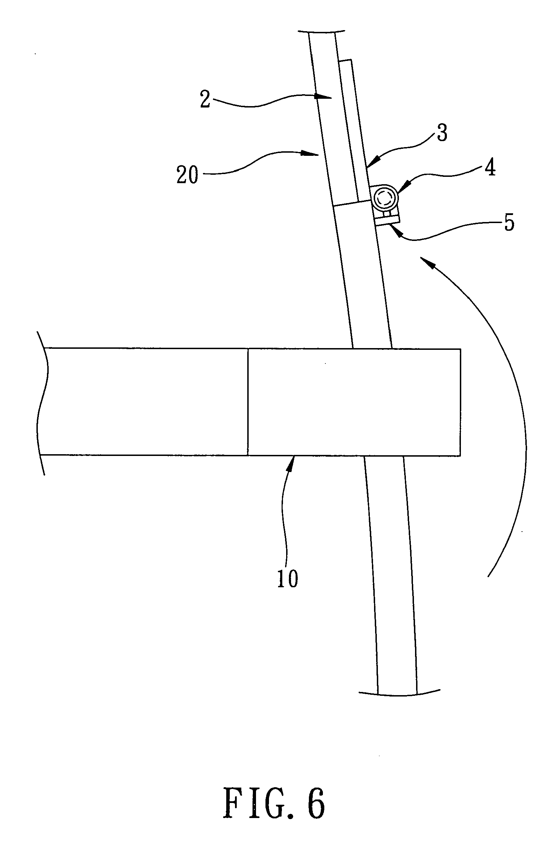

The magnetic connector 5 is also shaped as an elongated rod, and includes two integral sleeves 51 disposed respectively at two ends thereof, a U-shaped plate 52 disposed fixedly at a middle portion of the magnetic connector 5, and a second magnet unit consisting of two magnets 53 secured to the U-shaped plate 52. The sleeves 51 are disposed respectively within the notches 43 in the hinge units 4, and are sleeved respectively and rotatably around the pivot pins 44 so as to permit an assembly of the connecting member 3 and the auxiliary lenses 2 to turn upwardly relative to the primary eyeglass unit 10, as shown in Fig. 6. The U-shaped plate 52 is made of a magnetically conductive material, and has a horizontal upper plate portion 521 (see Fig. 4), a horizontal lower plate portion 522 (see Fig. 4), and a connecting plate portion 523 (see Fig. 4) having top and bottom sides that are formed respectively with the upper and lower plate portions 521, 522 to define a groove 524 (see Fig. 1) among the upper and lower plate portions 521, 522 and the connecting plate portion 523. The magnets 53 are fixed respectively to two side portions of a top surface of the upper plate portion 521 of the U-shaped plate 52. An assembly of the bridge 12 and the magnet 13 of the primary eyeglass unit 10 is received fittingly within the groove 524 in the U-shaped plate 52 such that a magnetic attractive force can be created between the bridge 12 and the U-shaped plate 52 so as to attach the magnetic connector 5 to the bridge 12.

As such, when the auxiliary eyeglass unit 20 is not to be used for a short period of time, the assembly of the connecting member 3 and the auxiliary lenses 2 can be turned upwardly relative to the primary eyeglass unit 10. When the auxiliary eyeglass unit 20 is not to be used for a long period of time or when replacement of the auxiliary eyeglass unit 20 is desired, the magnetic connector 5, together with the assembly of the connecting member 3 and the auxiliary lenses 2, can be removed from the primary eyeglass unit 10 by applying a pulling force, which is larger than the magnetic attractive force, to the magnetic connector 5.

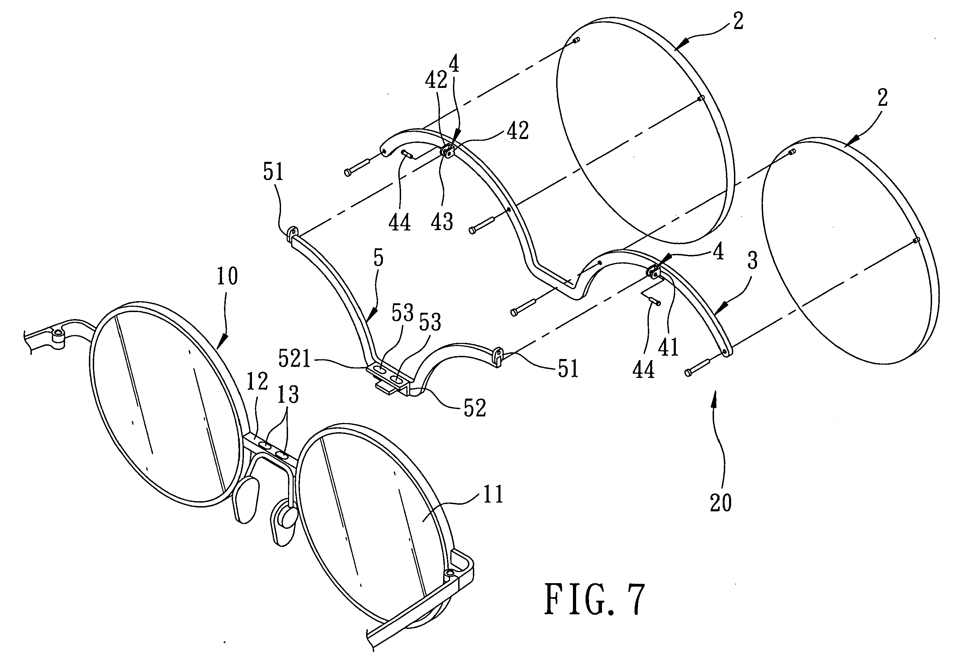

Fig. 7 shows the second preferred embodiment of an eyeglass assembly according to this invention, which includes a primary eyeglass unit 10 and an auxiliary eyeglass unit 20.

The primary eyeglass unit 10 includes two primary lenses 11, a bridge 12, and a first magnet unit consisting of two magnets 13 embedded within the bridge 12.

The auxiliary eyeglass unit 20 includes two auxiliary lenses 2, a connecting member 3, two hinge units 4, and a magnetic connector 5. The auxiliary lenses 2 and the connecting member 3 are similar to those of the previous embodiment in construction. Each of the hinge units 4 includes a base plate portion 41 connected fixedly to a rear surface of the connecting member 3, two lugs 42 extending respectively and integrally from two opposite sides of the base plate portion 41 to define a notch 43 therebetween, and a pivot pin 44 extending through holes in the lugs 42. The magnetic connector 5 includes two integral end lugs 51 disposed respectively within the notches 43 in the hinge units 4 and sleeved respectively and rotatably around the pivot pins 44, a U-shaped plate 82 disposed fixedly at a middle portion of the magnetic connector 5, and a second magnet unit consisting of two magnets 53 secured within a horizontal upper plate portion 521 of the U-shaped plate 52 and aligned respectively with the magnets 13 of the primary eyeglass unit 10.

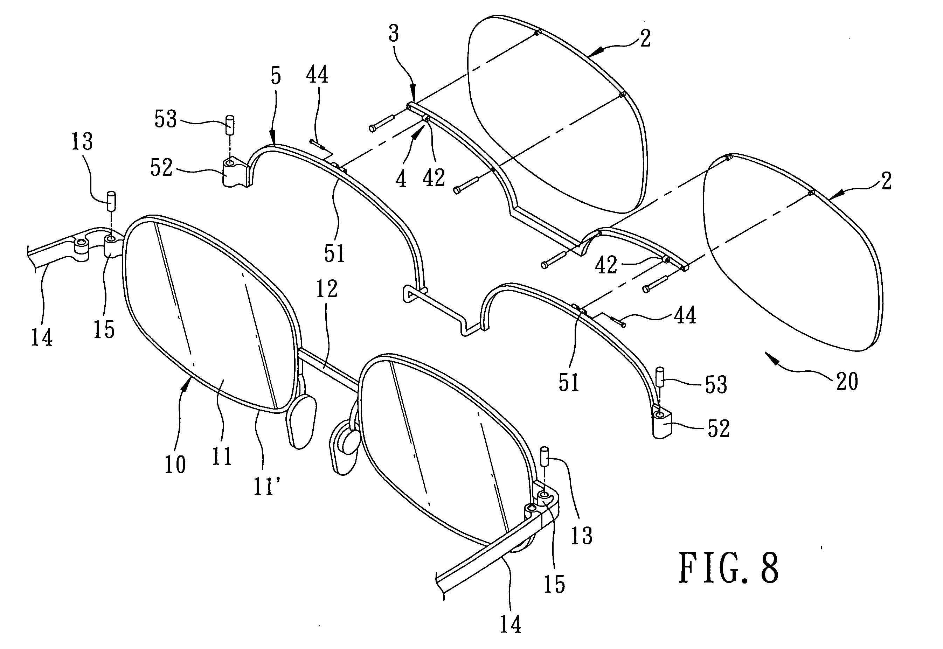

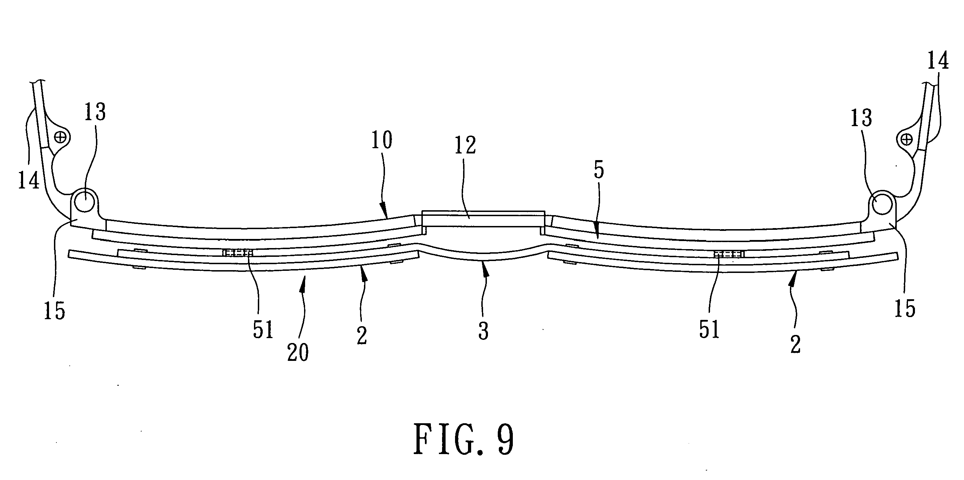

Figs. 8, and 9 show the third preferred embodiment of of an eyeglass assembly according to this invention, which includes a primary eyeglass unit 10 and an auxiliary eyeglass unit 20.

The primary eyeglass unit 10 includes two primary lenses 11, two annular frames 11' fixed respectively to peripheries of the primary lenses 11, a bridge 12 interconnecting the primary lenses 11 fixedly, two temples 14, two side pieces 15 connecting the temples 14 respectively and pivotally to the frames 11', and a first magnet unit consisting of two magnets 13 (see Fig. 4) that are shaped as posts which are fixed respectively within the side pieces 15.

The auxiliary eyeglass unit 20 includes two auxiliary lenses 2, a connecting member 3, two hinge units 4, and a magnetic connector 5.

The connecting member 3 is connected fixedly to outer peripheries of the auxiliary lenses 2.

Each of the hinge units 4 has two sleeve portions 42 formed integrally with the connecting member 3, and two pivot pins 44 extending respectively through the sleeve portions 42.

The magnetic connector 5 includes two pairs of integral sleeves 51 sleeved on the pivot pins 44, two magnetically conductive metal end pieces 52 abutting respectively against the magnets 13 of the primary eyeglass unit 10, and a second magnet unit consisting of two cylindrical magnets 53 fixed respectively within the end pieces 52. As such, a magnetic attractive force can be created between the magnetic connector 5 and the primary eyeglass unit 10.

## Claims

1. An eyeglass assembly including:
a primary eyeglass unit (10) including two primary lenses (11), and a bridge (12) having two opposite ends that are connected respectively and fixedly to the primary lenses (11); and
an auxiliary eyeglass unit (20) including two auxiliary lenses (2) disposed respectively in front of the primary lenses (11);
**characterized by**:
the primary eyeglass unit (10) further including a first magnet unit fixed on an assembly of the bridge (12) and the primary lenses (11); and
the auxiliary eyeglass unit (20) further including
a connecting member (3) connected fixedly to the auxiliary lenses (2), and
a magnetic connector (5) connected pivotally to the connecting member (3) so as to permit an assembly of the connecting member (3) and the auxiliary lenses (2) to turn upwardly relative to the primary eyeglass unit (10), the magnetic connector (5) including a fixed second magnet unit attracted magnetically by the first magnet unit of the primary eyeglass unit (10) such that the magnetic connector (5) is attached to the assembly of the bridge (12) and the primary lenses (11).

2. The eyeglass assembly as claimed in Claim 1, **characterized in that** the magnetic connector (5) further includes a fixed U-shaped plate (52) that has a horizontal upper plate portion (521), a horizontal lower plate portion (522), and a vertical connecting plate portion (523) having top and bottom sides which are formed respectively and integrally with the upper and lower plate portions (521, 522) to define a groove (524) among the upper and lower plate portions (521, 522) and the connecting plate portion (523), the upper plate portion (521) having a top surface that abuts against and that is connected fixedly to the second magnet unit, the U-shaped plate (52) being made of a magnetically conductive material and receiving an assembly of the bridge (12) and the first magnet unit of the primary eyeglass unit (10) fittingly within the groove (524) such that a magnetic attractive force can be created between the bridge (12) and the U-shaped plate (52) to enable the magnetic connector (5) to be attached to the bridge (12) of the primary eyeglass unit (10).

3. The eyeglass assembly as claimed in Claim 1, **characterized in that** the auxiliary lenses (2) are made of a resin.

4. The eyeglass assembly as claimed in Claim 1, **characterized in that** the connecting member (3) is shaped as an elongated rod, and has a horizontal middle rod portion (31), and two curved side rod portions (32) that are formed respectively and integrally with two opposite ends of the middle rod portion (31), the curved side rod portions (32) abutting respectively against and being connected respectively and fixedly to outer peripheries of rear side surfaces of the auxiliary lenses (2).

5. The eyeglass assembly as claimed in Claim 1, **characterized in that** the primary eyeglass unit (10) further includes two annular frames (11') fixed respectively to peripheries of the primary lenses (11), two temples (14), and two side pieces (15) connecting the temples (14) respectively and pivotally to the frames (11'), the first magnet unit of the primary eyeglass unit (10) including two magnets (13) fixed respectively within the side pieces (15), the second magnet unit of the magnetic connector (5) including two magnetically conductive metal end pieces (52) abutting respectively against the magnets (13) of the first magnet unit, and two magnets (53) fixed respectively within the end pieces (52).

6. An auxiliary eyeglass unit (20) for attachment to a primary eyeglass unit (10), the primary eyeglass unit (10) including two primary lenses (11), a bridge (12) having two opposite ends that are connected respectively and fixedly to the primary lenses (11), and a first magnet unit fixed on an assembly of the bridge (12) and the primary lenses (11), the auxiliary eyeglass unit (20) including two auxiliary lenses (2) adapted to be disposed respectively in front of the primary lenses (11);
**characterized by**:
the auxiliary eyeglass unit (20) further including:
a connecting member (3) connected fixedly to the auxiliary lenses (2); and
a magnetic connector (5) connected pivotally to the connecting member (3) so as to permit an assembly of the connecting member (3) and the auxiliary lenses (2) to turn upwardly relative to the primary eyeglass unit (10), the magnetic connector (5) including a fixed second magnet unit adapted to be attracted magnetically by the first magnet unit of the primary eyeglass unit (10) such that the magnetic connector (5) is attached to the assembly of the bridge (12) and the primary lenses (11).

7. The auxiliary eyeglass unit (20) as claimed in Claim 6, **characterized in that** the magnetic connector (5) further includes a fixed U-shaped plate (52) that has a horizontal upper plate portion (521), a horizontal lower plate portion (522), and a vertical connecting plate portion (523) having top and bottom sides which are formed respectively and integrally with the upper and lower plate portions (521, 522) to define a groove (524) among the upper and lower plate portions (521, 522) and the connecting plate portion (523), the upper plate portion (521) having a top surface that abuts against and that is connected fixedly to the second magnet unit, the U-shaped plate (52) being made of a magnetically conductive material and adapted to receive an assembly of the bridge (12) and the first magnet unit of the primary eyeglass unit (10) fittingly within the groove (524) such that a magnetic attractive force can be created between the bridge (12) and the U-shaped plate (52) to enable the magnetic connector (5) to be attached to the bridge (12) of the primary eyeglass unit (10).

8. The auxiliary eyeglass unit (20) as claimed in Claim 6, **characterized in that** the auxiliary lenses (2) are made of a resin.

9. The auxiliary eyeglass unit (20) as claimed in Claim 6, **characterized in that** the connecting member (3) is shaped as an elongated rod, and has a horizontal middle rod portion (31), and two curved side rod portions (32) that are formed respectively and integrally with two opposite ends of the middle rod portion (31), the curved side rod portions (32) abutting respectively against and being connected respectively and fixedly to outer peripheries of rear side surfaces of the auxiliary lenses (2).

10. The auxiliary eyeglass unit (20) as claimed in Claim 6, **characterized in that** the primary eyeglass unit (10) further includes two annular frames (11') fixed respectively to peripheries of the primary lenses (11), two temples (14), and two side pieces (15) connecting the temples (14) respectively and pivotally to the frames (11'), the first magnet unit of the primary eyeglass unit (10) including two magnets (13) fixed respectively within the side pieces (15), the second magnet unit of the magnetic connector (5) including two magnetically conductive metal end pieces (52) abutting respectively against the magnets (13) of the first magnet unit, and two magnets (53) fixed respectively within the end pieces (52).
